# EUROPEAN PATENT APPLICATION

(11) **EP 3 913 277 A1**
(43) Date of publication of application: **24.11.2021**
(21) Application number: 20176060.0
(22) Date of filing: 22.05.2020
(51) Int. Cl.: F21K 9/23, F21K 9/61, F21V 8/00, F21Y 103/33, F21Y 115/10, F21V 21/22, F21V 21/32, F21Y 113/20

(54) **LED LIGHT APPARATUS WITH MULTIPLE LIGHT SOURCES**

(71) Applicant: Xiamen Eco Lighting Co., Ltd., Xiamen Fujian 363999 (CN)
(72) Inventor: LIANG, Dejuan, Fujian, 361010 (CN); WANG, Qiyuan, Fujian, 361010 (CN); CAO, Liangliang, Fujian, 361010 (CN); YANG, Yi, Fujian, 361010 (CN); CHEN, Xueqiong, Fujian, 361010 (CN)
(74) Representative: Häckel, Stefan

(57) **Abstract**

A LED light apparatus includes a central light module, a peripheral light module, a support housing and a cap. The central light module has a central light passing cover for converting a first light to form a light beam. The peripheral light module has a circular light guide. The circular light guide surrounds the central light passing cover for converting a second light to form a peripheral light. The peripheral light has a lower intensity strength than the light beam. The support housing fixes the central light module and the peripheral light module. The cap is fixed to the support housing for plugging in an external socket for getting an external power supply.

## Description

### Field of Invention

The present invention is related to a LED light apparatus and more particularly related to a LED light apparatus with multiple light sources.

### Background

There are various lighting devices designed for satisfying different needs. For example, there are light bulbs to be installed on sockets. Such light bulbs are usually easy to be installed by users. For downlight devices used in normal home, it would be important to consider convenience for installation, safety and replacement.

Usually, LED light devices need certain driver circuits supplying proper driving currents to LED modules so as to make LED modules operating normally. Driver circuits occupy certain space and makes assembling of LED light devices more difficultly.

Therefore, it would be beneficial to provide designs that are easily to be installed, assembled, and thus even help decrease total cost. On the other hand, it would be even better if further advantages may be introduced in the same products.

In addition, when people need to install light devices in different places in their homes, offices or commercial stores, visual effect is also critical on light device design. It is important to provide a flexible design for great visual effect light devices.

### Summary of Invention

In some embodiments, a LED light apparatus includes a central light module, a peripheral light module, a support housing and a cap.

The central light module has a central light passing cover for emitting a first light. The peripheral light module has a circular light guide. The circular light guide surrounds the central light passing cover for converting a second light to form a peripheral light. In some embodiments, the first light has stronger intensity than the peripheral light.

The support housing is used for fixing the central light module and the peripheral light module. In some embodiments, the support housing together with the central light passing cover and the circular light guide form a circular disk structure.

The cap is used for plugging in an external socket for getting an external power supply. The neck unit has a first end connected to the support housing and a second end connected to the cap. The neck unit has a smaller diameter than the support housing.

In some embodiments, the central light module has a flat light source plate for generating the first light, and the peripheral light module has a light source ring facing toward the circular light guide.

In some embodiments, the neck unit has a shift structure for adjusting a length of the neck unit. Specifically, the shift structure may include two tube portions that may be shifted with each other for changing a total length of the neck unit.

In some embodiments, the neck unit has a bendable structure for changing a direction of the support housing with respect to the cap to change light directions of the first light and the second light. For example, the bendable structure may include a bendable tube that may be manually bent with a desired angle to change the relative angle between the support housing and the cap.

In some embodiments, the neck unit has a thin central column and a gap wall, the gap wall has air passing hole for heat dissipation. Specifically, the thin central column may contain conductive lines for transmitting electricity from the cap to the central light module and the peripheral light module.

In some embodiments, an inner end of the circular light guide has a smaller thickness than an outer end of the circular light guide. In such design, a gradient light effect may be produced to provide a nice visual effect.

In some embodiments, an inner end of the circular light guide has a larger thickness than an outer end of the circular light guide. In such design, the output light from the circular light guide is more even while the central portion of the circular light guide is closer to the light source of the peripheral light module.

In some embodiments, the circular light guide emits light only from a lateral wall of the circular light guide. Specifically, the circular light guide may be a circular disk structure with a central hole which wall receives light input. The circular disk has a flat surface and an exterior side wall. Only the external side wall provides escape area for major light to emit.

In some embodiments, the circular light guide emits light from a flat surface of the circular light guide. The support housing has a decoration ring separating the first light and the second light. Specifically, the circular light guide may be a circular disk structure with a central hole which wall receives light input. The circular disk has a flat surface which have small dots for light output. In such design, the flat surface of the circular light guide emits light and separated from the light from the central light module by the decoration ring.

In some embodiments, the LED light apparatus also includes a driver for separately controlling the first light and the second light. The central light module and the peripheral light module are controlled separately to provide more combination of visual effect.

In some embodiments, the first light and the second light have different optical parameters. For example, the central light module emits light of a first color temperature, a first color, a first intensity while the peripheral light module emit light of a different second color temperature, a different color, a second intensity.

In some embodiments, the LED light apparatus also includes a driver for adjusting the second light according to a status of the first light. For example, users may control the first light to increase intensity, to change color temperature via a remote control, a wall switch or a manual switch disposed on the LED light apparatus. The driver detects the parameter of the first light from the central light module and automatically adjusts the second light of the peripheral light module.

In some embodiments, the LED light apparatus includes a driver storing in the cap for dividing heat of the central light module and the driver. The neck unit provides a distance for separating the central light module which may include LED modules that generates heat while emitting light.

In some embodiments, the neck unit has multiple supporting levers. For example, the neck unit is composed of three levers with first ends connecting to the cap and second ends connecting to the support housing. Such neck unit extends the support housing forward while using less material and provides nice heat dissipation effect.

In some embodiments, the circular light guide is rotatable with respect to the central light cover to change a control setting of the first light and the second light. For example, there is a rotation structure in the center of the support housing for the circular light guide to rotate along the rotation structure. There is a sensor for collecting a rotation angle. the rotation angle is sent to a driver to receive the rotation angle and then converts the rotation angle to a corresponding control setting. For example, the control setting may correspond to a color temperature, color, intensity of the first light and/or the second light.

According to an embodiment of the present invention, the LED light apparatus includes a central light module, a peripheral light module, a support housing and a cap. In some other embodiments, the cap may be replaced with different structures for retrieving an external power source or an internal power source like a battery.

The central light module has a central light passing cover for converting a first light to form a light beam. Specifically, the central light passing cover may condense light from one or more directions to focus into a light beam. The central light passing cover may be implemented as various structures. For example, a single convex lens, concave lens, multiple lens assembly, a lens with a lot of micro lens structures may be adopted, depending on different design requirements like cost or thickness of the LED light apparatus.

The peripheral light module has a circular light guide. The circular light guide is not necessary to be circular shape. Rectangular or other geometric enclosing shapes with an opening for exposing the light beam mentioned above may be referred as the circular light guide here.

The circular light guide surrounds the central light passing cover for converting a second light to form a peripheral light. The term "surround" mentioned here refer to an enclosing relation. Specifically, the light beam through the central light passing cover is passing from a light passing opening of the circular light guide. Therefore, the circular light guide does not have to physically enclose the central light passing cover. Instead, the circular light guide provides a light passing opening for the light beam of the central light passing cover, which is a way for the circular light guide to surround the central light passing cover.

The peripheral light generated by the circular light guide forms a surrounding luminance source around the light beam. The peripheral light has a lower intensity strength than the light beam, which means the strength per area of the peripheral light is smaller than the light beam on surface of the LED light apparatus. The light beam provides an intensifying effect to emphasize an object while the peripheral light is used for providing general luminance effect.

Please be noted that in other embodiments, the intensity strength may not need to be a limitation, but some features may be combined with other features mentioned in this disclosure to form alternative embodiments, depending on different design needs.

There is a support housing for fixing the central light module and the peripheral light module. The support housing may be made of one piece or multiple parts assembled together. The relative positions like the central light passing cover, the circular light guide and the cap are fixed by the support housing. The support housing may be made of plastic, metal or any combination of various materials.

In this embodiment, the cap is fixed to the support housing for plugging in an external socket for getting an external power supply. In some embodiments, the cap has two electrodes for receiving an alternating current like 110V or 220V standard power source via an Edison standard socket.

Similarly, the cap may be canceled and the features of the invention may be combined into other embodiments, depending on design needs.

In some embodiments, the LED light apparatus includes a first light module for generating the first light and includes a second light module for geniting the second light. The first light module and the second light module are two separate LED components. For example, the first light module and the second light module may have different optical characteristics, power parameters, luminance parameters and even may be controlled separately by providing two separate control signals.

Alternatively, one LED module may be used in the LED light apparatus. In such case, the single LED module provides both the first light and the second light respectively into the central light passing cover and the circular light guide.

In some embodiments, the peripheral light module includes a light guide for distributing the second light from a LED ring to emit from a front side of the circular light guide. In some embodiments, the light guide may be a circular disk shape with a central opening so that the light beam of the central light passing cover may pass through.

In some embodiments, LED modules are disposed at a lateral side of the light guide so that a front surface of the light guide emits light. When the light guide is a circular disk as mentioned above, the LED modules may be disposed at inner lateral side or exterior lateral side. More specific examples are explained as follows.

As mentioned above, the "ring" is not necessary to be circular. Furthermore, the inner side and the exterior side of the light guide may have different shapes. For example, the inner side of the light guide is circular while the exterior side of the light guide has a polygonal shape like a rectangular shape.

The light guide may be made of PMMA or PC material, disposing predetermined grooves or other structures so that entered light may be reflected, refracted, or directed to escape the light guide via predetermined positions. In some embodiments, the light guide has a front side and a back side and both sides may provide light to escape therefrom.

In some embodiments, the back side of the LED ring also emits light. In other words, the back side of the LED light apparatus also provides luminance, making output light more soft and increasing overall luminance efficacy.

In some embodiments, the LED ring has a ring belt mounted with a second light module, e.g. LED modules. The ring belt surrounds the central light passing cover. The light guide surrounds the ring belt. As mentioned above, the term "surround" may refer to an enclosing relation, in certain projection aspect. For example, the ring belt may not be surrounding the central light passing cover in a three-dimension space, but still surrounds the central light passing cover from a top view as a two-dimension aspect. Such configuration still fits the definition of the term "surround" used in this disclosure.

In some embodiments, there is a cover ring exposing the central light passing cover and concealing the LED ring. This prevents unnecessary light leak and makes the overall appearance more appealing.

In some embodiments, there is a light guide ring covering an exterior lateral side of the light guide. The light guide ring may help protect the light guide and also improves overall appearance. The light guide ring may be made of elastic material or other material.

In some embodiments, the light guide ring comprises a top ring cover and a bottom ring cover together covering the exterior lateral side of the light guide.

In some embodiments, there is a reflective layer on a back side of the peripheral ring for reflecting a part of the second light back to the front side of the circular light guide. As mentioned above, the back side of the peripheral ring may be exposed and allow light to escape to form part of the peripheral light. In this case, the back side of the peripheral ring is covered with a reflective layer or cover to reflecting light back to the light guide so that more light may be escaped from the front side of the peripheral ring.

In some embodiments, there is a diffusion layer covering the front side of the circular light guide. The diffusion layer may help soften the light output to prevent undesired light output visual appearance of the light guide.

In some embodiments, the first light and the second light are controlled separately. As mentioned above, there may be one light module or two light modules for providing the first light and the second light. In some embodiments, when the first light and the second light may be operated separately, there may be multiple statuses of the LED light apparatus.

For example, the LED light apparatus may be controlled to show only the light beam, the peripheral ring light or both.

Although the first light and the second light may be operated separately in some embodiments, the first light may be designed to relate to the second light in certain predetermined logic. For example, when both the first light and the second light are turned on, the first light may have a first luminance level, which is different when the second light is turned off. Such design makes the luminance effect more flexible and more intelligent.

In some embodiments, the LED light apparatus may include a light source support. An exterior wall of the light source support is attached with a LED ring emitting the second light. An inner bottom of the light source support is attached with a LED plate for emitting the first light.

For example, the light source support may have a cup shape. The lateral wall of the cup shape light source support may be attached with the LED ring for emitting the second light. The inner bottom of the cup shape light source support may be attached with a LED plate for emitting the first light. Wires may be disposed on the light source support for connecting further to driver circuits or an external power source.

In some embodiments, the central light passing cover is fixed above the LED plate to the light source support, so that the first light of the LED plate forms a light beam.

In some embodiments, the LED light apparatus may include a top fixing ring. The top fixing ring and the light source support clip an inner edge of the light guide for fixing the light guide. In other words, the light source support and the top fixing ring together holds the light guide while allowing the light beam to escape via a central light pass opening of the top fixing ring.

In some embodiments, the light source support is a heat sink device, e.g. made of heat dissipation material like metal, plastic, or combination of multiple materials. The light source support is close to the major heat source and such design helps improve robustness and life span of the LED light apparatus.

In some other embodiments, a LED ring is fixed to the support housing for generating the second light. A LED plate is fixed to the support housing for generating the first light. A fixing ring and the support housing clip the light guide to fix the light guide.

In such design, the support housing provides the function of the light source support directly. The support housing may be made of a one-process molding, thus saving more cost and further improve assembly convenience.

In some embodiments, an exterior lateral wall of the support housing has an inwardly curved shape. In other words, there is a curve line on the exterior lateral side of the support housing, gradually changing its tilt angle to form an inwardly curved shape.

This improves light output, e.g. more light movement from the back side of the light guide, as mentioned above. The exterior wall of the support housing may be applied with a reflective material for further improving overall luminance efficacy.

In some embodiments, a ratio of a lateral height of the support housing to a diameter of the light guide is more than 50%. This makes the LED light apparatus looking like a T shape structure from a lateral view and may be assembled to a light support more conveniently, also increasing overall luminance efficacy.

### Brief Description of Drawings

- Fig. 1: illustrates an exploded view of a LED light apparatus embodiment.
- Fig. 2: illustrates a perspective view of an assembled result of Fig. 1.
- Fig. 3: illustrates a top view of Fig. 1.
- Fig. 4: illustrates cross-sectional view of Fig. 1 via the A-A line of Fig. 3.
- Fig. 5: illustrates a central light passing cover example.
- Fig. 6: illustrates component relation in another embodiment.
- Fig. 7: illustrates another embodiment.
- Fig. 8: illustrates additional features of an embodiment.
- Fig. 9: illustrates another embodiment.
- Fig. 10: illustrates an embodiment with a shift structure.
- Fig. 11: illustrates an embodiment with a bendable structure.
- Fig. 12: illustrates an embodiment with a thin column structure.
- Fig. 13A: illustrates a cross-section view of a first type of circular light guide.
- Fig. 13B: illustrates a cross-section view of a second type of circular light guide.
- Fig. 14: illustrates a neck unit having multiple supporting levers.
- Fig. 15: illustrates a rotation control example.

### Detailed Description

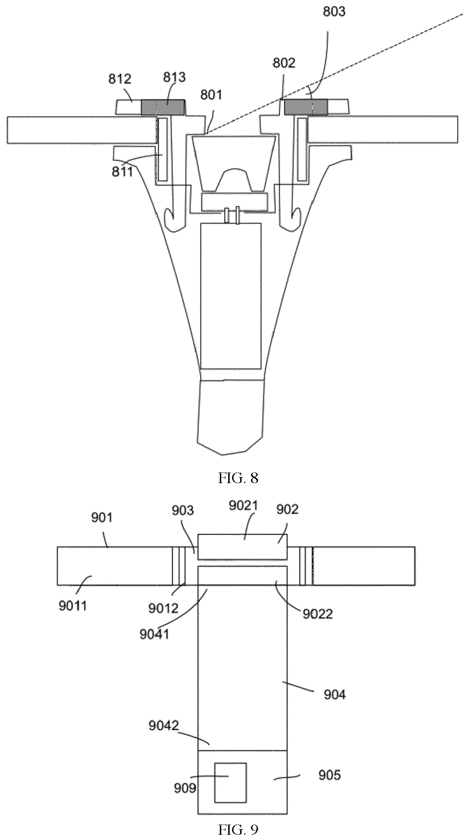

Please refer to Fig. 9, a LED light apparatus includes a central light module 902, a peripheral light module 901, a support housing 903, a neck unit 904 and a cap 905.

The central light module 902 has a central light passing cover 9021 for emitting a first light from a flat light source plate 9022. The peripheral light module 901 has a circular light guide 9011 receiving light from a light source ring 9012. The circular light guide 9011 surrounds the central light passing cover 9021 for converting a second light to form a peripheral light. In some embodiments, the first light has stronger intensity than the peripheral light.

The support housing 903 is used for fixing the central light module 902 and the peripheral light module 901. In some embodiments, the support housing 903 together with the central light passing cover 9021 and the circular light guide 9011 form a circular disk structure.

The cap 905 is used for plugging in an external socket (like an Edison socket, not shown) for getting an external power supply. The neck unit 904 has a first end 9041 connected to the support housing 903 and a second end 9042 connected to the cap 905. The neck unit 904 has a smaller diameter than the support housing 903.

In Fig. 9, the central light module 902 has a flat light source plate 9022 for generating the first light. The peripheral light module 901 has a light source ring 9012 facing toward the circular light guide 9011.

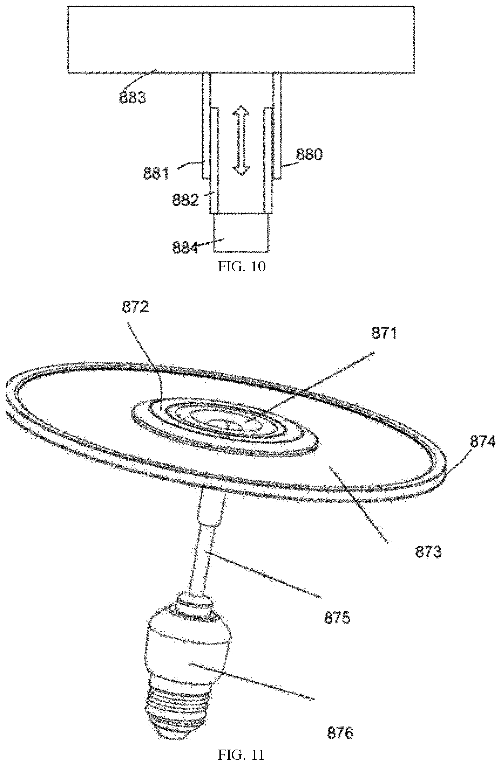

In Fig. 10, the neck unit 880 has a shift structure for adjusting a length of the neck unit. Specifically, the shift structure may include two tube portions 881, 882 that may be shifted with each other for changing a total length of the neck unit. For example, the tube portions 881, 882 may have a groove and a protruding bar for sliding to change a total length of the neck unit, thus changing a relative distance between the support housing 883 and the cap 884.

In Fig. 11, the neck unit 875 is a bendable structure for changing a direction of the support housing with respect to the cap 876 to change light directions of the first light and the second light. For example, the bendable structure may include a bendable tube that may be manually bent with a desired angle to change the relative angle between the support housing and the cap.

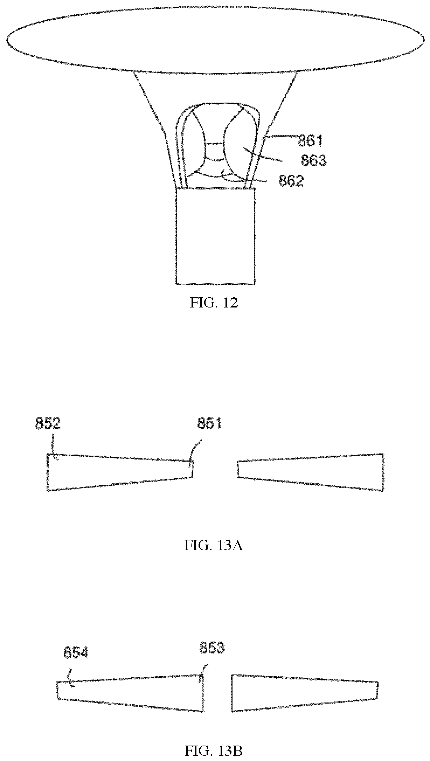

In Fig. 12, the neck unit has a thin central column 862 and a gap wall 861. The gap wall 861 surrounds the think central column 862. The gap wall 861 has one more than one air passing holes 863 for heat dissipation. Specifically, the thin central column 862 may contain conductive lines for transmitting electricity from the cap to the central light module and the peripheral light module.

In Fig. 13A, an inner end 851 of the circular light guide has a smaller thickness than an outer end 852 of the circular light guide. In such design, a gradient light effect may be produced to provide a nice visual effect.

In Fig. 13B, an inner end 853 of the circular light guide has a larger thickness than an outer end 854 of the circular light guide. In such design, the output light from the circular light guide is more even while the central portion of the circular light guide is closer to the light source of the peripheral light module.

In Fig. 11, the circular light guide may emit light only from a lateral wall 874 of the circular light guide. Specifically, the circular light guide may be a circular disk structure with a central hole which wall receives light input. The circular disk has a flat surface 873 and an exterior lateral wall 874. Only the external side wall 874 provides escape area for major light to emit.

In Fig. 11, the circular light guide may emit light from a flat surface 873 of the circular light guide. The support housing has a decoration ring 872 separating the first light and the second light. Specifically, the circular light guide may be a circular disk structure with a central hole which wall receives light input. The circular disk has a flat surface which have small dots for light output. In such design, the flat surface of the circular light guide emits light and separated from the light from the central light module by the decoration ring.

In Fig. 9, the LED light apparatus also includes a driver 909 for separately controlling the first light and the second light. The central light module and the peripheral light module are controlled separately to provide more combination of visual effect.

In some embodiments, the first light and the second light have different optical parameters. For example, the central light module emits light of a first color temperature, a first color, a first intensity while the peripheral light module emit light of a different second color temperature, a different color, a second intensity.

In some embodiments, the LED light apparatus also includes a driver for adjusting the second light according to a status of the first light. For example, users may control the first light to increase intensity, to change color temperature via a remote control, a wall switch or a manual switch disposed on the LED light apparatus. The driver detects the parameter of the first light from the central light module and automatically adjusts the second light of the peripheral light module.

In some embodiments, the LED light apparatus includes a driver storing in the cap for dividing heat of the central light module and the driver as illustrated in Fig. 9. The neck unit provides a distance for separating the central light module which may include LED modules that generates heat while emitting light.

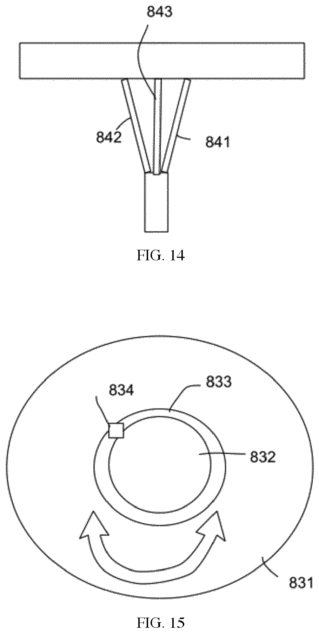

In Fig. 14, the neck unit has multiple supporting levers 841, 842, 843. For example, the neck unit is composed of three levers 841, 842, 843 with first ends connecting to the cap and second ends connecting to the support housing. Such neck unit extends the support housing forward while using less material and provides nice heat dissipation effect.

In Fig. 15, the circular light guide 831 is rotatable with respect to the central light cover 832 to change a control setting of the first light and the second light. For example, there is a rotation structure 833 in the center of the support housing for the circular light guide 831 to rotate along the rotation structure 833. There is a sensor 834 for collecting a rotation angle. the rotation angle is sent to a driver to receive the rotation angle and then converts the rotation angle to a corresponding control setting. For example, the control setting may correspond to a color temperature, color, intensity of the first light and/or the second light.

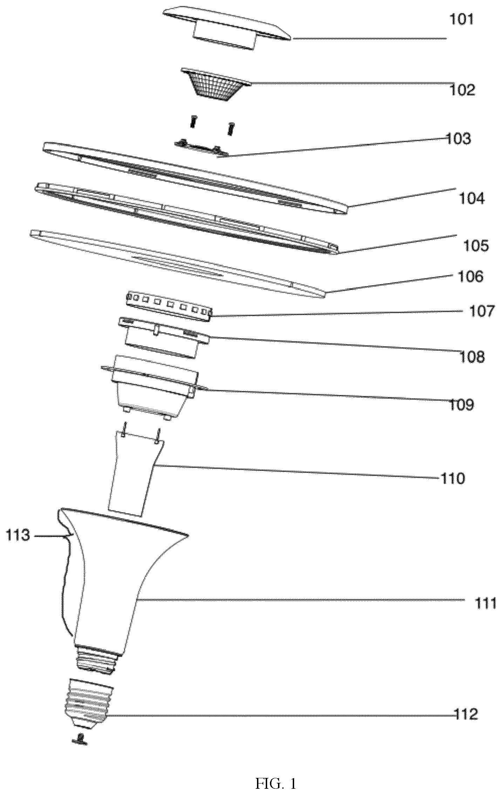

Please refer to Fig. 1, Fig. 2, Fig. 3, Fig. 4 and Fig. 5. These drawings illustrate an embodiment of the present invention.

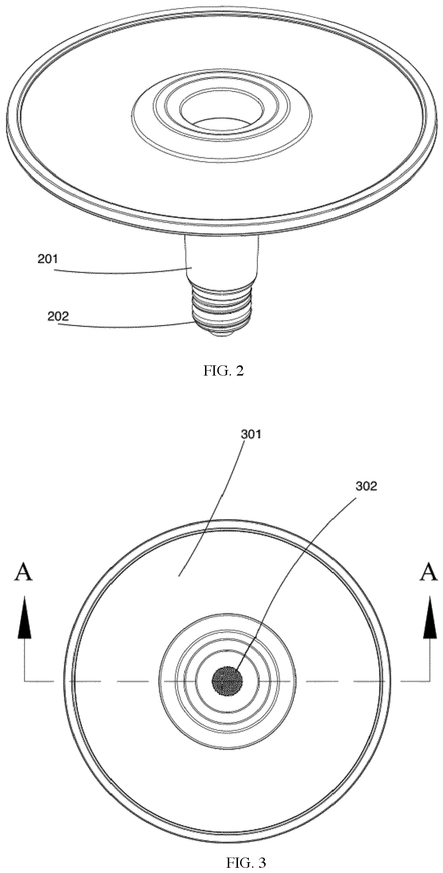

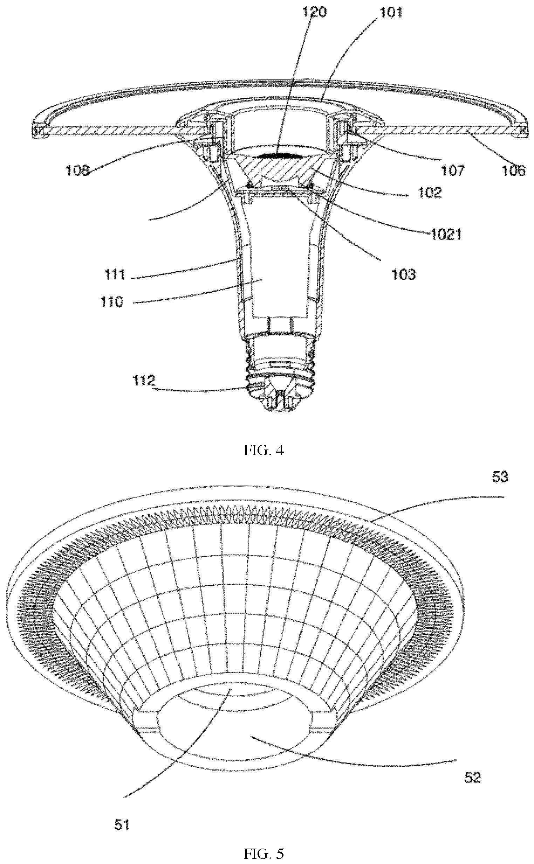

Fig. 1 is an exploded view of the embodiment. Fig. 3 is a top view of the embodiment, showing a cross line A-A. Fig. 4 illustrates a cross-sectional view of the embodiment with the cross line A-A of Fig. 3.

In Fig. 1 and Fig. 4, the LED light apparatus has a cover ring 101, a central light passing cover 102, a LED plate 103, a top ring cover 104, a bottom ring cover 105, a light guide 106, a LED ring 107, a first light source support 108, a second light source support 109, a driver board 110, a support housing 111, and a cap 112.

The cover ring 101 has a central opening for exposing the central light passing cover while concealing the LED ring 107 below. The LED ring 107 emits a second light entering the light guide 106 to form a peripheral light. The light guide 106 has a front side and a back side, both emitting the peripheral light. The top ring cover 104 and the bottom ring cover 105 together forming a light guiding ring, clipping the exterior edge of the light guide 106.

The LED plate 103 emits a first light entering the central light passing cover 103 forming a light beam 120. The driver plate 110 may be plugged to the LED plate 103, also providing electricity to the LED ring 107. The cap 112 may be plugged into an Edison socket for receiving an external power source.

The first light source support 108 and the second light source support 109 may be made separately and form a light source support. The light source support may be even made of a one-piece component, or even integrated with the support housing 111.

The cover ring 101 may be modified for fixing the light guide 106 together with the support housing 111. There is an inwardly curved wall 113 on the lateral side of the support housing 111.

Please refer to Fig. 2. The assembled result of the embodiment of Fig. 1 forms an elegant LED light apparatus with a main body 201 and a cap 202 that may be installed to a light support. The light support may hold multiple such LED light apparatuses.

Please refer to Fig. 3. There is a light beam 302 and a peripheral light 301 provided from different portions of the LED light apparatus.

Please refer to Fig. 5, which illustrates a central light passing cover example.

In Fig. 5, the central light passing cover has a receiving cavity 52 for allowing light entering the lens 51. The central light passing cover has a top edge 53 to be fixed to support housing directly or indirectly.

According to an embodiment of the present invention, the LED light apparatus includes a central light module, a peripheral light module, a support housing and a cap. In some other embodiments, the cap may be replaced with different structures for retrieving an external power source or an internal power source like a battery.

The central light module has a central light passing cover for converting a first light to form a light beam. Specifically, the central light passing cover may condense light from one or more directions to focus into a light beam. The central light passing cover may be implemented as various structures. For example, a single convex lens, concave lens, multiple lens assembly, a lens with a lot of micro lens structures may be adopted, depending on different design requirements like cost or thickness of the LED light apparatus.

The peripheral light module has a circular light guide. The circular light guide is not necessary to be circular shape. Rectangular or other geometric enclosing shapes with an opening for exposing the light beam mentioned above may be referred as the circular light guide here.

The circular light guide surrounds the central light passing cover for converting a second light to form a peripheral light. The term "surround" mentioned here refer to an enclosing relation. Specifically, the light beam through the central light passing cover is passing from a light passing opening of the circular light guide. Therefore, the circular light guide does not have to physically enclose the central light passing cover. Instead, the circular light guide provides a light passing opening for the light beam of the central light passing cover, which is a way for the circular light guide to surround the central light passing cover.

The peripheral light generated by the circular light guide form a surrounding luminance source around the light beam. The peripheral light has a lower intensity strength than the light beam, which means the strength per area of the peripheral light is smaller than the light beam on surface of the LED light apparatus. The light beam provides an intensifying effect to emphasize an object while the peripheral light is used for providing general luminance effect.

Please be noted that in other embodiments, the intensity strength may not need to be a limitation, but some features may be combined with other features mentioned in this disclosure to form alternative embodiments, depending on different design needs.

There is a support housing for fixing the central light module and the peripheral light module. The support housing may be made of one piece or multiple parts assembled together. The relative positions like the central light passing cover, the circular light guide and the cap are fixed by the support housing. The support housing may be made of plastic, metal or any combination of various materials.

In this embodiment, the cap is fixed to the support housing for plugging in an external socket for getting an external power supply. In some embodiments, the cap has two electrodes for receiving an alternating current like 110V or 220V standard power source via an Edison standard socket.

Similarly, the cap may be canceled and the features of the invention may be combined into other embodiments, depending on design needs.

In some embodiments, the LED light apparatus includes a first light module for generating the first light and includes a second light module for geniting the second light. The first light module and the second light module are two separate LED components. For example, the first light module and the second light module may have different optical characteristics, power parameters, luminance parameters and even may be controlled separately by providing two separate control signals.

Alternatively, one LED module may be used in the LED light apparatus. In such case, the single LED module provides both the first light and the second light respectively into the central light passing cover and the circular light guide.

In some embodiments, the peripheral light module includes a light guide for distributing the second light from a LED ring to emit from a front side of the circular light guide. In some embodiments, the light guide may be a circular disk shape with a central opening so that the light beam of the central light passing cover may pass through.

In some embodiments, LED modules are disposed at a lateral side of the light guide so that a front surface of the light guide emits light. When the light guide is a circular disk as mentioned above, the LED modules may be disposed at inner lateral side or exterior lateral side. More specific examples are explained as follows.

As mentioned above, the "ring" is not necessary to be circular. Furthermore, the inner side and the exterior side of the light guide may have different shapes. For example, the inner side of the light guide is circular while the exterior side of the light guide has a polygonal shape like a rectangular shape.

The light guide may be made of PMMA or PC material, disposing predetermined grooves or other structures so that entered light may be reflected, refracted, or directed to escape the light guide via predetermined positions. In some embodiments, the light guide has a front side and a back side and both sides may provide light to escape therefrom.

In some embodiments, the back side of the LED ring also emits light. In other words, the back side of the LED light apparatus also provides luminance, making output light more soft and increasing overall luminance efficacy.

In some embodiments, the LED ring has a ring belt mounted with a second light module, e.g. LED modules. The ring belt surrounds the central light passing cover. The light guide surrounds the ring belt. As mentioned above, the term "surround" may refer to an enclosing relation, in certain projection aspect. For example, the ring belt may not be surrounding the central light passing cover in a three-dimension space, but still surrounds the central light passing cover from a top view as a two-dimension aspect. Such configuration still fits the definition of the term "surround" used in this disclosure.

In some embodiments, there is a cover ring exposing the central light passing cover and concealing the LED ring. This prevents unnecessary light leak and makes the overall appearance more appealing.

In some embodiments, there is a light guide ring covering an exterior lateral side of the light guide. The light guide ring may help protect the light guide and also improves overall appearance. The light guide ring may be made of elastic material or other material.

In some embodiments, the light guide ring comprises a top ring cover and a bottom ring cover together covering the exterior lateral side of the light guide.

In some embodiments, there is a reflective layer on a back side of the peripheral ring for reflecting a part of the second light back to the front side of the circular light guide. As mentioned above, the back side of the peripheral ring may be exposed and allow light to escape to form part of the peripheral light. In this case, the back side of the peripheral ring is covered with a reflective layer or cover to reflecting light back to the light guide so that more light may be escaped from the front side of the peripheral ring.

In some embodiments, there is a diffusion layer covering the front side of the circular light guide. The diffusion layer may help soften the light output to prevent undesired light output visual appearance of the light guide.

In some embodiments, the first light and the second light are controlled separately. As mentioned above, there may be one light module or two light modules for providing the first light and the second light. In some embodiments, when the first light and the second light may be operated separately, there may be multiple statuses of the LED light apparatus.

For example, the LED light apparatus may be controlled to show only the light beam, the peripheral ring light or both.

Although the first light and the second light may be operated separately in some embodiments, the first light may be designed to relate to the second light in certain predetermined logic. For example, when both the first light and the second light are turned on, the first light may have a first luminance level, which is different when the second light is turned off. Such design makes the luminance effect more flexible and more intelligent.

In some embodiments, the LED light apparatus may include a light source support. An exterior wall of the light source support is attached with a LED ring emitting the second light. An inner bottom of the light source support is attached with a LED plate for emitting the first light.

For example, the light source support may have a cup shape. The lateral wall of the cup shape light source support may be attached with the LED ring for emitting the second light. The inner bottom of the cup shape light source support may be attached with a LED plate for emitting the first light. Wires may be disposed on the light source support for connecting further to driver circuits or an external power source.

In some embodiments, the central light passing cover is fixed above the LED plate to the light source support, so that the first light of the LED plate forms a light beam.

In some embodiments, the LED light apparatus may include a top fixing ring. The top fixing ring and the light source support clip an inner edge of the light guide for fixing the light guide. In other words, the light source support and the top fixing ring together holds the light guide while allowing the light beam to escape via a central light pass opening of the top fixing ring.

In some embodiments, the light source support is a heat sink device, e.g. made of heat dissipation material like metal, plastic, or combination of multiple materials. The light source support is close to the major heat source and such design helps improve robustness and life span of the LED light apparatus.

In some other embodiments, a LED ring is fixed to the support housing for generating the second light. A LED plate is fixed to the support housing for generating the first light. A fixing ring and the support housing clip the light guide to fix the light guide.

In such design, the support housing provides the function of the light source support directly. The support housing may be made of a one-process molding, thus saving more cost and further improve assembly convenience.

In some embodiments, an exterior lateral wall of the support housing has an inwardly curved shape. In other words, there is a curve line on the exterior lateral side of the support housing, gradually changing its tilt angle to form an inwardly curved shape.

This improves light output, e.g. more light movement from the back side of the light guide, as mentioned above. The exterior wall of the support housing may be applied with a reflective material for further improving overall luminance efficacy.

In some embodiments, a ratio of a lateral height of the support housing to a diameter of the light guide is more than 50%. This makes the LED light apparatus looking like a T shape structure from a lateral view and may be assembled to a light support more conveniently, also increasing overall luminance efficacy.

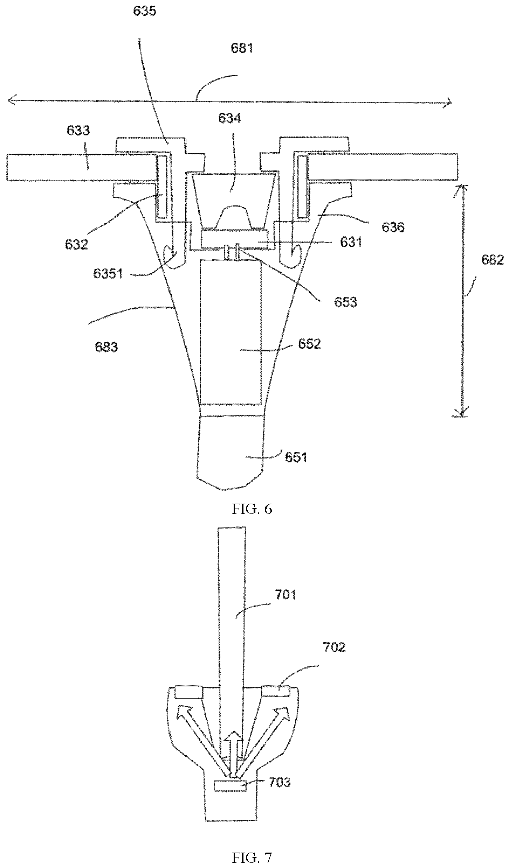

Please refer to Fig. 6. Fig. 6 shows another embodiment.

In Fig. 6, the LED light apparatus includes a light guide 633 and a central light passing cover 634 for converting a second light source 632 and a first light source 631 respectively to form a second light and a first light mentioned above.

In this embodiment, a top fixing ring 635 is fixed to the support housing 636 directly with a hook structure 6351. The second light source 632 and the first light source 631 are fixed to the support housing 636 directly, too. The driver plate 652 is plugged to the first light source 631 with elastic plugging terminals 653. There is a cap 651 to be plugged to an external socket like an Edison socket.

An exterior lateral wall 683 of the support housing 636 has an inwardly curved shape. A ratio of a lateral height 682 of the support housing 636 to a diameter 681 of the light guide 633 is more than 50%.

Please refer to Fig. 7, which shows another embodiment with different light source arrangement.

In Fig. 7, only one light source 703 is used for providing both the first light and the second light mentioned above. Instead of using a light guide, a reflective cup or other optical structures may be used so that the second light form a peripheral light 702. In addition, central light passing cover may be used for generating a light beam 701.

Please refer to Fig. 8, which is an embodiment having a similar structure as explained in Fig. 6. Fig. 8 is used for explaining two additional features for such embodiments and other embodiments.

The first additional feature is that the central light passing cover may be kept a distance from a top surface of the LED light apparatus to prevent glare effect which may cause uncomfortable feeling to human eyes. Specifically, when a top surface of the central light passing cover is lower than a top surface of the LED light apparatus, as illustrated in Fig. 8, the light is restricted in a projection range.

For example, the light from an exposed edge 801 of the central light passing cover to an opposite edge 802 of light escape hole forms an angle 803 over the top surface of the LED light apparatus. It is found that the angle 803 would be better to keep about 30 degrees to prevent unnecessary glare effect. In some embodiments, the angle 30 would be proper to be set between 10 degrees to 45 degrees to achieve desired result.

The second additional feature is that a diffusion element 813 disposed on top of the second light source 811 would help prevent undesired dark areas in contrast with bright areas due to separately disposed LED modules. The diffusion element 813 may be a separate element from the fixing ring 812, a part of the fixing ring 812, a layer attached on surface of the fixing ring 812 or any other forms that may help eliminate the dark area visual effect. Please be noted that the dark area is in contrast with bright area, forming an uneven visual effect.

The two additional features may be applied to similar embodiments, not necessary to be the same structure illustrated in Fig. 8.

In addition to the above-described embodiments, various modifications may be made, and as long as it is within the spirit of the same invention, the various designs that can be made by those skilled in the art are belong to the scope of the present invention.

## Claims

1. A LED light apparatus, comprising:
a central light module having a central light passing cover for emitting a first light;
a peripheral light module having a circular light guide, the circular light guide surrounding the central light passing cover for converting a second light to form a peripheral light;
a support housing for fixing the central light module and the peripheral light module;
a cap for plugging in an external socket for getting an external power supply; and
a neck unit with a first end connected to the support housing and a second end connected to the cap, the neck unit having a smaller diameter than the support housing.

2. The LED light apparatus of claim 1, wherein the central light module has a flat light source plate for generating the first light, and the peripheral light module has a light source ring facing toward the circular light guide.

3. The LED light apparatus of any one of the preceding claims, wherein the neck unit has a shift structure for adjusting a length of the neck unit.

4. The LED light apparatus of any one of the preceding claims, wherein the neck unit has a bendable structure for changing a direction of the support housing with respect to the cap to change light directions of the first light and the second light.

5. The LED light apparatus of any one of the preceding claims, wherein the neck unit has a thin central column and a gap wall, the gap wall has air passing hole for heat dissipation.

6. The LED light apparatus of any one of the preceding claims, wherein an inner end of the circular light guide has a smaller thickness than an outer end of the circular light guide.

7. The LED light apparatus of any one of the preceding claims, wherein an inner end of the circular light guide has a larger thickness than an outer end of the circular light guide.

8. The LED light apparatus of any one of the preceding claims, wherein the circular light guide emits light only from a lateral wall of the circular light guide.

9. The LED light apparatus of any one of the preceding claims, wherein the circular light guide emits light from a flat surface of the circular light guide, the support housing has a decoration ring separating the first light and the second light.

10. The LED light apparatus of any one of the preceding claims, further comprising a driver for separately controlling the first light and the second light.

11. The LED light apparatus of claim 10, wherein the first light and the second light have different optical parameters.

12. The LED light apparatus of any one of the preceding claims, further comprising a driver for adjusting the second light according to a status of the first light.

13. The LED light apparatus of any one of the preceding claims, further comprising a driver storing in the cap for dividing heat of the central light module and the driver.

14. The LED light apparatus of any one of the preceding claims, wherein the neck unit has multiple supporting levers.

15. The LED light apparatus of any one of the preceding claims, wherein the circular light guide is rotatable with respect to the central light cover to change a control setting of the first light and the second light.
